Europäisches Patentamt

**European Patent Office**

**Office européen des brevets**

(11) Veröffentlichungsnummer: **0 043 387**
**A1**

## (12) EUROPÄISCHE PATENTANMELDUNG

(21) Anmeldenummer: **80200649.4**

(22) Anmeldetag: **04.07.80**

(51) Int. Cl.³: **H 02 K 13/02, H 01 R 39/34**

(43) Veröffentlichungstag der Anmeldung: **13.01.82**
**Patentblatt 82/2**

(71) Anmelder: **BBC Aktiengesellschaft Brown, Boveri & Cie.,**
**CH-5401 Baden (CH)**

(84) Benannte Vertragsstaaten: **AT BE CH DE FR GB IT LI LU NL SE**

(72) Erfinder: **Zerlik, Willibald, Weihermattstrasse 389,**
**CH-5242 Birr AG (CH)**

(54) **Elektrische Verbindungsanordnung.**

(57) Bei luftgekühlten Maschinen können infolge unterschiedlicher Erwärmung von Rotorwelle (4) und den in einer axialen Wellenbohrung (5) gelegenen Stromschienen (6, 7), die ihrerseits an beiden Enden mit Bolzen zum Anschluss an die Rotorwicklung bzw. Schleifringe verbunden sind, Axialkräfte auf die Welle ausgeübt werden, welche diese verkrümmen können. Durch Anordnung des Schleifringbolzens (11) mit Axialspiel in seiner radialen Wellenbohrung (13) und geeignete Ausbildung des elektrischen Verbindungsgliedes zwischen Schleifring (1) und Schleifringbolzen (11) wird der Schleifring (1) mechanisch von der Rotorwelle (4) entkoppelt. Hierzu werden zwei alternative Ausführungsformen des elektrischen Verbindungsgliedes vorgeschlagen. Bei der ersten ist dem Schleifringbolzen (11) ein Kontaktträger (18) fest verbunden, der in einem Ringraum (19) am schleifringbolzenseitigen Schleifringende eintaucht. In einer Ringnut im Kontaktträger liegt ein Kontaktlamellenband (21), das die elektrische Verbindung zwischen Kontaktträger (18) und Schleifring (1) bewerkstelligt. Bei der zweiten Alternative ist am schleifringbolzenseitigen Ende des Schleifrings ein Kontaktring vorgesehen, der über ein Band aus Kupferlitze mit dem Schleifringbolzen verbunden ist.

61/80 0043387
He/Ca

- 1 -

## Elektrische Verbindungsanordnung

Die Erfindung bezieht sich auf eine elektrische Verbindungsanordnung zwischen in einer axialen Wellenbohrung angeordneten Stromschienen und dem Schleifring einer elektrischen Maschine, umfassend einen mit der Stromschiene fest verbundenen Schleifringbolzen, der mit Axialspiel in einer radialen Wellenbohrung angeordnet ist, und dessen radial äusseres Ende über ein elektrisches Verbindungsglied mit dem Schleifring verbunden ist.

Die Schleifringzuleitung üblicher Bauart besteht aus zwei Kupfer-Schienen mit halbkreisförmigem Querschnitt, die in eine axial verlaufende Wellenbohrung eingebaut sind. Die beiden Zuleitungsschienen sind an ihren Enden einerseits über Zuleitungsbolzen mit der Wicklung und andererseits über Schleifringbolzen und Kontaktglieder mit den Schleifringen verbunden. Schleifringbolzen und Zuleitungsbolzen sind im allgemeinen fest in den jeweiligen radialen Wellenbohrungen gehalten. Im Betrieb der Maschine kann durch unterschiedliche Längenausdehnung der beiden Zuleitungsschienen und der Welle eine resultierende Axialkraft auf die Welle ausgeübt werden und diese verkrümmen. Das Verkrümmen der Welle führt dann zu erhöhter Laufunruhe der gesamten Turbogruppe.

Bei einer elektrischen Maschine mit flüssigkeitsgekühltem Rotor nach der US-PS 3 733 502 hat man den vorstehenden Gegebenheiten insofern Rechnung getragen, als dort sowohl der Schleifringbolzen als auch der Zuleitungsbolzen in ihren radialen Wellenbohrungen mit Axialspiel angeordnet sind. Durch eine geeignete Führung der Verbindungsleitung zwischen dem Zuleitungsbolzen und dem Rotorwickelkopf werden Relativbewegungen zwischen Zuleitungsbolzen und Rotorwelle bzw. Rotorwickelkopf ermöglicht, ohne dass die miteinander zu verbindenden Teile beschädigt werden. Ueber die Verbindung zwischen dem Schleifringbolzen und den Schleifringen sind der genannten US-Patentschrift keine Einzelheiten zu entnehmen.

Der Erfindung liegt die Aufgabe zugrunde, eine Verbindungsanordnung der eingangs genannten Gattung zu schaffen, bei welcher der Schleifring vom Schleifringbolzen mechanisch entkoppelt ist und jedoch in der Lage ist, die im Betrieb auftretenden hohen Ströme zuverlässig zu führen.

Die Lösung dieser Aufgabe erfolgt zum einen erfindungsgemäss dadurch, dass das elektrische Verbindungsglied einen ringförmigen, die Rotorwelle umgebenden, mit dem Schleifringbolzen fest verbundenen Kontaktträger umfasst, der unter Zwischenschaltung eines gleichfalls ringförmigen Kontaktlamellenbandes in einen Ringraum am schleifringbolzenseitigen Scheifringende eintaucht oder dieses Ende umgibt und dass die mit dem Kontaktlamellenband zusammenwirkenden Flächen des schleifringbolzenseitigen Schleifringendes und des Kontaktträgers als Kontaktflächen ausgebildet sind, zum anderen dadurch, dass erfindungsgemäss das schleifringbolzenseitige Schleifringende mit einem Kontaktring fest verbunden ist und zwischen dem Kontaktring und dem Schleifringbolzen ein flexibles Band aus gutleitendem Material angeordnet ist, das zumindest teilweise durch eine Abdeckung gegen Fliehkrafteinwirkung gesichert ist.

Die erfindungsgemässe Verbindungsanordnung ist insbesondere für gasgekühlte Rotoren vorgesehen, da bei diesen vergleichsweise grossen Temperaturdifferenzen zwischen der Rotorwelle und den Stromschienen auftreten können.

Bei der ersten Alternative sichert das ringförmige Kontaktlamellenband eine grossflächige Stromübertragung und erlaubt gleichzeitig Axialbewegungen zwischen dem fest mit dem Schleifringbolzen verbundenem Kontaktträger und dem Schleifring. In Verbindung mit der axialspielbehafteten Führung des Schleifringbolzens in der Rotorwelle treten somit keine unzulässigen Axialkräfte auf die Welle auf. Die axiale Länge der mit dem Kontaktlamellenband zusammenwirkenden Kontaktflächen und die (axiale) Länge des Kontaktlamellenbandes selbst können so gewählt werden, dass auch bei maximalen Relativbewegungen keine Klemmgefahr auftritt.

Bei der zweiten Alternative erfolgt die mechanische Entkopplung zwischen Schleifring und Schleifringbolzen durch das flexible Band.

Die Erfindung wird nachstehend anhand von zwei in der Zeichnung dargestellten Ausführungsbeispielen näher erläutert.

- 4 -

In der Zeichnung zeigt:

Fig. 1 eine Verbindungsanordnung mit einem Kontaktlamellenband zur elektrischen Verbindung zwischen Schleifring und Schleifringbolzen im Längsschnitt,

Fig. 2 ein Radialschnitt durch die Verbindungsanordnung nach Fig. 1 längs deren Linie A-A,

Fig. 3 eine schematisch angedeutete Alternative zur Ausführungsform nach Fig. 1 bzw. 2, bei der die Kontaktierung des Schleifrings an dessen Aussenumfang erfolgt,

Fig. 4 eine Verbindungsanordnung mit einem Band aus Kupferlitze zur elektrischen Verbindung zwischen Schleifring und Schleifringbolzen im Längsschnitt,

Fig. 5 einen Radialschnitt durch die Verbindungsanordnung nach Fig. 4 längs deren Linie B-B,

Fig. 6 einen Schnitt durch die Verbindungsanordnung nach Fig. 5 längs deren Linie C-C.

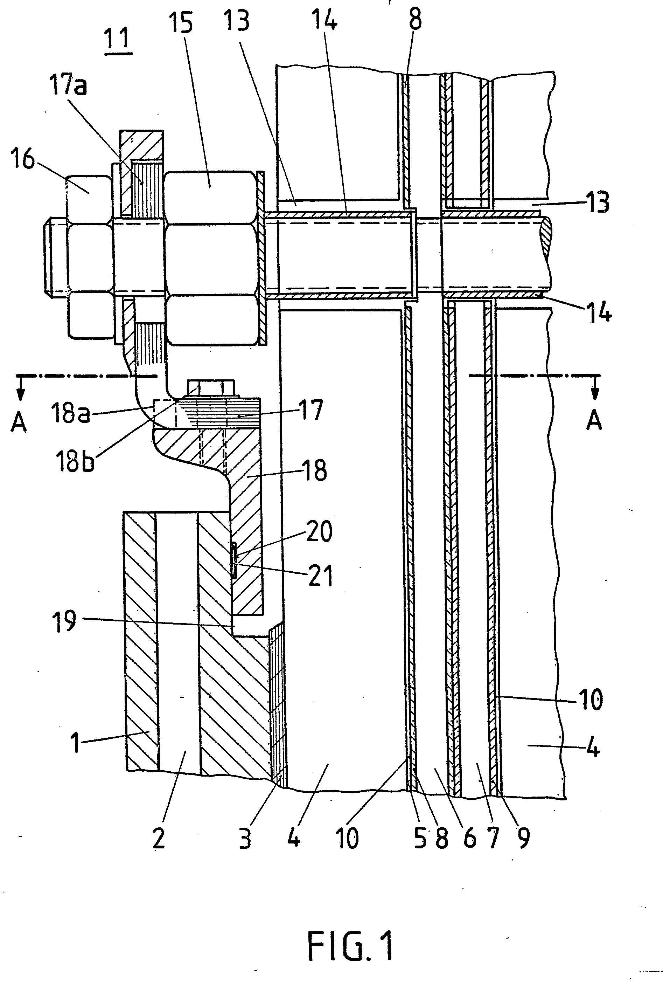

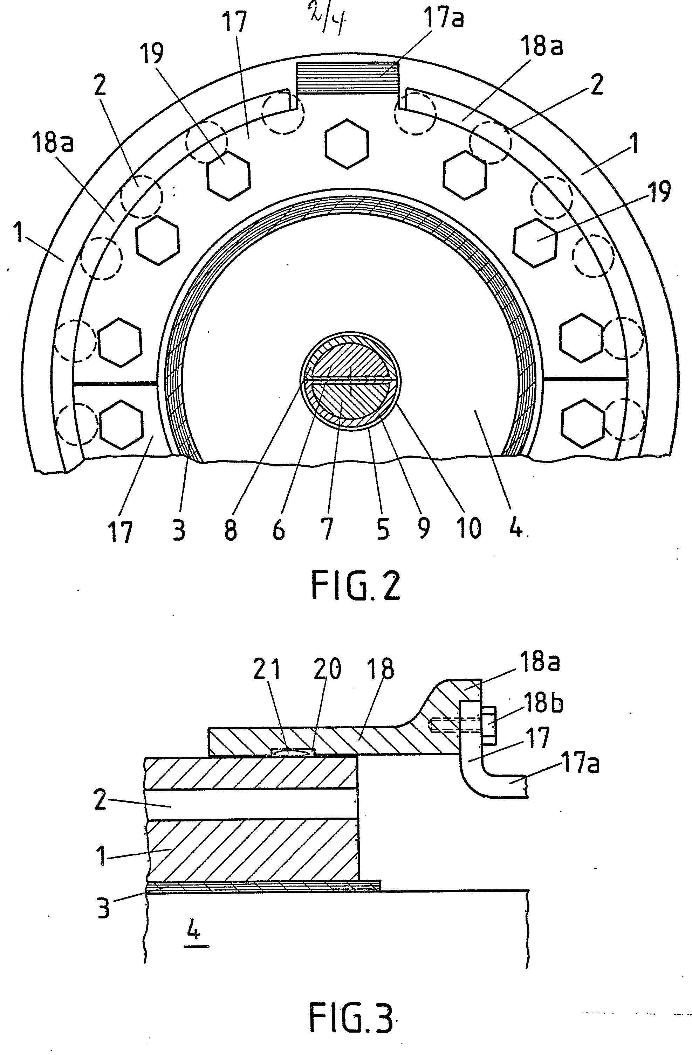

In Fig. 1 und 2 ist ein Schleifring 1 mit axialen Kühlluftbohrungen 2 unter Zwischenschaltung einer Isolierhülse 3 auf eine Welle 4 einer elektrischen Maschine aufgeschrumpft. In einer Axialbohrung 5 der Rotorwelle 4 sind zwei Stromschienen 6, 7 mit halbkreisförmigen Querschnitt angeordnet, welche gegeneinander und gegenüber der Rotorwelle durch Isolierschichten 8, 9 isoliert sind. Zwischen den Stromschienen 6, 7 und der Wandung der Wellenbohrung 5 sind (in Fig. 1 bzw. 2 übertrieben gross gezeichnete) ringförmige Spalte 10 vorgesehen. Sie erlauben eine Relativbewegung zwischen den Stromschienen und der Welle, ohne jedoch nennenswerte Radialbewegungen zuzulassen.

Die elektrische Verbindung zwischen dem Schleifring 1 und der Stromschiene 6 erfolgt durch einen generell mit der Bezugsziffer 11 versehenen diametral durch die Welle 4 geführten Schleifringbolzen. Dieser ist im mittleren Bereich fest mit der einen Stromschiene 6 verschraubt und führt durch eine radiale Bohrung 12 in der anderen Stromschiene 7 und eine diametrale Durchgangsbohrung 13 der Rotorwelle 4 nach aussen. Der innerhalb der Bohrung 13 gelegene Bolzenteil ist gegenüber dieser und insbesondere auch gegenüber der Stromschiene 7 durch Isolierhülsen 14 isoliert. Die diametrale Wellenbohrung 13 ist als Langlochbohrung ausgebildet und erlaubt somit axiale Relativbewegungen des Schleifringbolzens 11 gegenüber der Rotorwelle, z.B. bei unterschiedlicher Erwärmung von Stromschienen 6, 7 und Rotorwelle 4. Auf das äussere Ende des Schleifringbolzens 11 ist im wellennahen Bereich eine Mutter 15 aufgeschrumpft. Mittels einer weiteren Mutter 16 sind an beiden Enden des Schleifringbolzens 11 je ein mit einer Oese 17a versehener Verbindungsbügel 17 befestigt, der seinerseits mit einem die Rotorwelle 4 umgebenden ringförmigen Kontaktträger 18 vermittels Schrauben 18b verbunden ist. Wie aus dem Radialschnitt nach Fig. 2 hervorgeht, sind beide Verbindungsbügel gleichartig gestaltet und lamelliert. Das schleifringbolzenseitige Ende des Kontaktträgers 18 weist einen ringförmigen, nasenartigen Vorsprung 18a auf, der die beiden Verbindungsbügel 17 gegen Fliehkrafteinwirkung sichert. Im Bereich der Oesen 17a ist der Vorsprung 18a jeweils unterbrochen.

Das schleifringseitige Ende des Kontaktträgers 18 taucht in eine ringförmige Ausdrehung 19 des Schleifrings 1 ein. Der Innendurchmesser der Ausdrehung 19 entspricht etwa dem Aussendurchmesser des genannten Kontaktträgerendes. Im mittleren Abschnitt des Kontaktträgers 18 ist eine Ringnut 20 vorgesehen, in welche ein ringförmiges Kontaktlamellenband 21 eingelegt ist. Dieses Kontaktlamellenband besteht aus einem Berylliumbronzeblechstreifen, dessen Ende nicht miteinander verbunden sind. Dieser Blechstreifen ist jalousieartig geschlitzt, und die entstehenden Lamellenstege sind einzeln etwa um 40° aus der Bandebene herausgedreht. Nähere Einzelheiten derartiger Kontaktlamellenbänder sind beispielsweise in der Zeitschrift "Technische Rundschau" 1975, Nr. 26 und 43 im Aufsatz "Das MC-Kontaktlamellen-Prinzip" bekannt. Um das Verklemmen zwischen Kontaktträger 18 und Schleifring 1 bzw. dessen Ausdrehung 19 weitgehend zu vermeiden, ist die Eintauchtiefe des Kontaktträgers 18 in die Ausdrehung 19 entsprechend gross gewählt. Darüber hinaus erstreckt sich das Kontaktlamellenband 21 nur über den mittleren Abschnitt des Kontaktträgers 18 (bezogen auf dessen eingetauchten Teil). Die axiale Länge der Ringnut 20 entspricht etwa derjenigen des Kontaktlamellenbandes 21 und beträgt zwischen einem Drittel und der Hälfte der Eintauchtiefe. Auf diese Weise erfolgt die eigentliche Führung des Kontaktträgers 18 in der Ausdrehung 19 vermittels Kontaktträgeraussenumfang und Innenwandung der Ausdrehung. Das Kontaktlamellenband muss somit keine Führungsaufgaben übernehmen und dient somit nur der Stromübertragung. Zur optimalen Kontaktgabe sind zudem die Ringnut 20 und die innere Oberfläche der Ausdrehung 19 versilbert.

In der in Fig. 3 dargestellten Variante umgibt der ringförmige Kontaktträger 18 das bolzenseitige Schleifringende. Im Gegensatz zur Ausführung nach Fig. 1 und 2 ist dort am Innenumfang des Kontakträgers die Ringnut 20 zur Aufnahme des gleichfalls ringförmigen Kontaktlamellenbandes 21 vorgesehen. Abgesehen von der andersartigen Ausgestaltung der Verbindungsbügel 17 - ihre Oesen 17a weisen nach innen - entspricht diese in ihren übrigen Teilen vollumfänglich derjenigen nach Fig. 1 und Fig. 2.

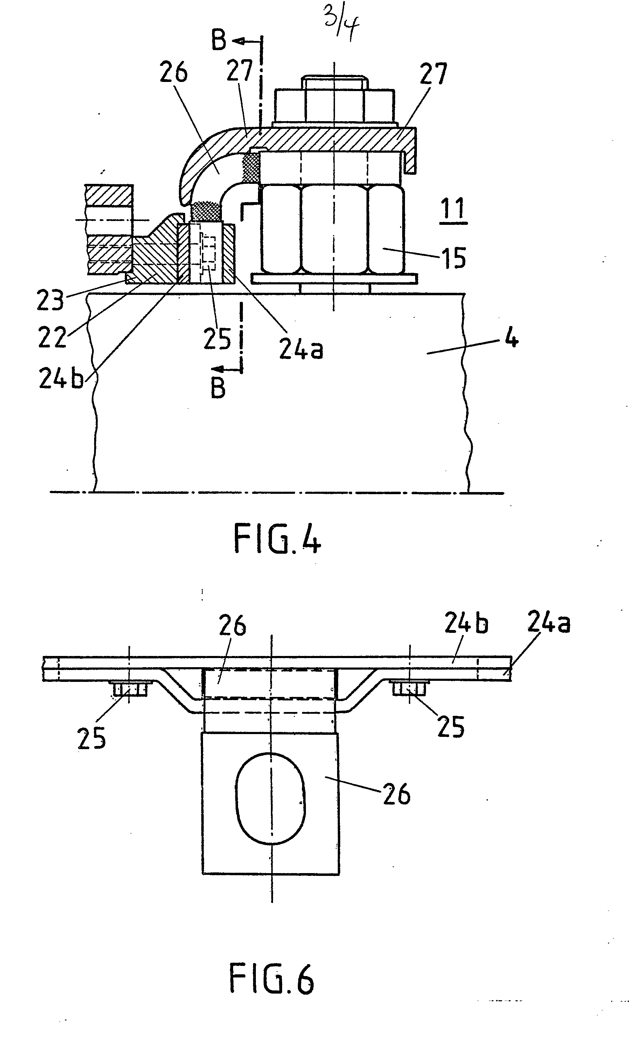

Bei der in Fig. 4 dargestellten alternativen Ausführungsform, die bezüglich der Anordnung von Schleifring, Stromschienen und Schleifringbolzen mit derjenigen nach Fig. 1, 2 und 3 übereinstimmt, ist das schleifringbolzenseitige Schleifringende mit einem stirnseitigen Zwischenring 22 versehen, wobei sich ein ringförmiger Ansatz 23 an der Innenseite des Schleifrings 1 abstützt. An der bolzenseitigen Stirnfläche des Zwischenrings 22 ist ein geteilter Kontaktring 24 befestigt. Ein weiterer Ansatz 23a am bolzenseitigen Ende des Zwischenringes 22 sichert die Kontaktringhälften gegen Fliehkräfte. Zwischenring 22 und Kontaktring 24 sind dabei gemeinsam durch eine Vielzahl von über den Umfang verteilten Schrauben 25 mit dem Schleifring 1 verschraubt. Die elektrische Verbindung zwischen dem Schleifringbolzen 11 und dem Kontaktring 24 erfolgt durch ein hochflexibles Band 26 aus Kupferlitze. Zur Sicherung des Bandes 26 gegen Fliehkrafteinwirkung ist das Band 26 durch eine gleichzeitig mit diesem am Schleifringbolzen 11 befestigte, auf der Schleifringseite radial nach innen abgebogene Abdeckung 27 gesichert.

Wie aus dem Radialschnitt nach Fig. 3 hervorgeht, erfolgt die elektrische Verbindung zwischen dem Band 26 und dem Kontaktring 24 grossflächig. Im Schnitt nach Fig. 4 ist erkenntlich, dass der Kontaktring 24 zweiteilig ausgeführt ist und aus zwei aufeinanderliegenden geteilten Einzelringen 24a und 24b besteht, welche im Bereich der Befestigung des Bandes 26 einen Raum zwischen sich freilassen. Diese Anordnung erlaubt die grossflächige Verbindung des Bandes 26 mit dem Kontaktring, z.B. durch Löten.

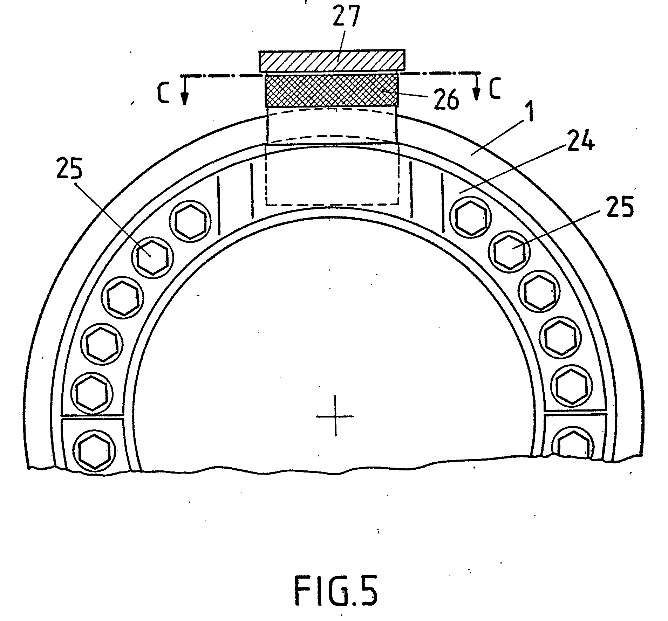

Die Erfindung ist selbstverständlich nicht auf die in der Zeichnung dargestellten Ausführungsformen beschränkt. So können bei der Anordnung nach Fig. 1, 2 bzw. 3 statt ringförmiger Nuten 20 im Kontaktträger 18 diese Nuten 20 auch im entsprechenden Abschnitt des Schleifrings 1 angeordnet sein. Bei der Ausführung nach Fig. 4 bis 6 kann der Zwischenring 22 entfallen, wobei dann der Kontaktring 24 unmittelbar an der bolzenseitigen Stirnfläche des Schleifrings 1, vorzugsweise in einer Nut, zu befestigen ist.

Bezugszeichenliste

1    Schleifring
2    axiale Kühlluftbohrungen
3    Isolierhülse
4    Rotorwelle
5    Axialbohrung in der Rotorwelle
6,7  Stromschienen
8,9  Isolierschichten der Stromschienen
10   ringförmiger Spalt zwischen Wellenbohrung und Stromschienen
11   Schleifringbolzen
12   radiale Bohrung in der Stromschiene 7
13   diametrale Wellenbohrung
14   Isolierhülse
15   aufgeschrumpfte Mutter
16   Befestigungsmutter
17   Verbindungsbügel
17a  Oese des Verbindungsbügels
18   Kontaktträger
18a  nasenartiger, ringförmiger Vorsprung
     des Kontaktträgers 18
18b  Befestigungsschrauben
19   Ausdrehung am schleifringbolzenseitigen
     Ende des Schleifrings
20   Ringnut im Kontaktträger 18
21   Kontaktlamellenband
22   Zwischenring
23   ringförmiger schleifringseitiger Ansatz
     des Zwischenrings 22
23a  ringförmiger bolzenseitiger Ansatz des
     Zwischenrings 23
24   Kontaktring mit Ringteilen 24a und 24b
25   Schraubbolzen
26   Band aus Kupferlitze
27   Abdeckung des Bandes 26

1

P a t e n t a n s p r ü c h e

1. Elektrische Verbindungsanordnung zwischen in einer axialen Wellenbohrung (5) angerodneten Stromschienen (6, 7) und dem Schleifring (1) einer elektrischen Maschine mit gasgekühltem Rotor, umfassend je einen mit einer der Stromschienen fest verbundenen Schleifringbolzen (11), der mit Axialspiel in einer radialen Wellenbohrung (12) angeordnet ist, und dessen radial äusseres Ende über ein elektrisches Verbindungsglied (17, 18, 21; 22, 24, 25, 26) mit dem Schleifring 1 verbunden ist, dadurch gekennzeichnet, dass das elektrische Verbindungsglied einen ringförmigen, die Rotorwelle (4) umgebenden, mit den Schleifringbolzen (11) fest verbundenen Kontaktträger (18) umfasst, der unter Zwischenschaltung eines gleichfalls ringförmigen Kontaktlamellenbandes (21) in einen Ringraum (19) am schleifringbolzenseitigen Schleifringende eintaucht oder dieses Ende umgibt und dass die mit dem Kontaktlamellenband (21) zusammenwirkenden Flächen des schleifringbolzenseitigen Schleifringendes und des Kontaktträgers (18) als Kontaktflächen ausgebildet sind.

2. Elektrische Verbindungsanordnung zwischen in einer axialen Wellenbohrung (5) angeordneten Stromschienen (6, 7) und dem Schleifring (1) einer elektrischen Maschine mit gasgekühltem Rotor, umfassend je einen mit einer der Stromschienen fest verbundenen Schleifringbolzen (11), der mit Axialspiel in einer radialen Wellenbohrung (12) angeordnet ist, und dessen radial äusseres Ende über ein elektrisches Verbindungsglied (17, 18, 21; 22, 24, 25, 26) mit dem Schleifring (1) verbunden ist, dadurch gekennzeichnet, dass das schleifringbol-

2

zenseitige Schleifringende mit einem Kontaktring (24) fest verbunden ist und zwischen dem Kontaktring (24) und dem radial äusseren Ende des Schleifringbolzens (11) ein flexibles Band (26) aus einem elektrisch gutleitendem Material angeordnet ist, das zumindest teilweise durch eine Abdeckung (27) gegen Fliehkrafteinwirkung gesichert ist.

3. Elektrische Verbindungsanordnung nach Anspruch 1, dadurch gekennzeichnet, dass der Aussendurchmesser des schleifringseitigen Endes des Kontaktträgers (18) dem Innendurchmesser des Ringraumes (19) am Schleifringende entspricht und die axiale Länge des Kontaktlamellenbandes (21) geringer, vorzugsweise zwischen der Hälfte und einem Drittel der Eintauchtiefe des Kontaktträgers (18) im Ringraum (19) beträgt und etwa im mittigen Abschnitt des eingetauchten Kontaktträgerendes eine Ringnut (20) zur Aufnahme des Kontaktlamellenbandes (21) vorgesehen ist.

4. Elektrische Verbindungsanordnung nach Anspruch 2, dadurch gekennzeichnet, dass der Kontaktring (24) unter Zwischenschaltung eines sich gegen die Innenfläche des Schleifringendes abstützenden Zwischenringes (22) mit dem Schleifringende fest verbunden ist.

5. Elektrische Verbindungsanordnung nach Anspruch 2 oder 4, dadurch gekennzeichnet, dass der Kontaktring (24) axial zweigeteilt ausgebildet ist, wobei zwischen beiden Ringteilen (24a, 24b) ein Raum zur Aufnahme des Bandes (26) vorgesehen ist.

FIG.1

0043387

FIG.2

FIG.3

0043387

3/4

FIG.4

FIG.6

FIG.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 948 398 (ASSOCIATED ELECTRICAL INDUSTRIES LTD.) <br> * Ansprüche 4 bis 7; Seite 2, Zeile 121 bis Seite 3, Zeile 50 * | 2,4 |
| | DE - A1 - 2 848 442 (G.P. VARTANIAN et al.) <br> * Seite 10, Absatz 2 und Fortsetzung Seite 11 * | 1 |
| | DE - C - 831 115 (SIEMENS-SCHUCKERTWERKE AG) <br> * Seite 2, Zeilen 76 bis 94 * | 1 |
| A | DE - B - 2 036 767 (LENINGRADSKOJE ELEKTROMASCHINOSTROITELNOJE OBIEDINENIE ELEKTROSILA IMENI S.M. KIROWA) <br> * Spalte 2, Zeilen 44 bis 62 * | |
| A | DE - C - 699 017 (BROWN, BOVERI & CIE AG) <br> * Seite 2, Zeilen 49 bis 61 * | |

**KLASSIFIKATION DER ANMELDUNG (Int. Cl.³)**

H 02 K 13/02
H 01 R 39/34

**RECHERCHIERTE SACHGEBIETE (Int. Cl.³)**

H 01 R 39/00
H 02 K 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 09-03-1981 | GESSNER |

EPA form 1503.1 06.78